(19) **Europäisches Patentamt / European Patent Office / Office européen des brevets**

(11) **EP 2 912 818 B1**

(12) **FASCICULE DE BREVET EUROPEEN**

(45) Date de publication et mention
de la délivrance du brevet:
**03.05.2017 Bulletin 2017/18**

(21) Numéro de dépôt: **13783347.1**

(22) Date de dépôt: **25.10.2013**

(51) Int Cl.:
**H04L 29/06** (2006.01)     **H04W 4/00** (2009.01)
**H04W 12/06** (2009.01)

(86) Numéro de dépôt international:
**PCT/EP2013/072451**

(87) Numéro de publication internationale:
**WO 2014/067880 (08.05.2014 Gazette 2014/19)**

(54) **PROCEDE D'AUTHENTIFICATION MUTUELLE ENTRE UN TERMINAL ET UN SERVEUR DISTANT PAR L'INTERMEDIAIRE D'UN PORTAIL D'UN TIERS**

GEGENSEITIGES AUTHENTIFIZIERUNGSVERFAHREN ZWISCHEN EINEM ENDGERÄT UND EINEM FERNSERVER ÜBER EIN PORTAL EINES DRITTEN

METHOD FOR MUTUAL AUTHENTICATION BETWEEN A TERMINAL AND A REMOTE SERVER VIA A THIRD-PARTY PORTAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2012 EP 12306346**

(43) Date de publication de la demande:
**02.09.2015 Bulletin 2015/36**

(73) Titulaire: **Gemalto SA**
**92190 Meudon (FR)**

(72) Inventeurs:
• **BERARD, Xavier**
**F-13705 La Ciotat (FR)**
• **PICO, Richard**
**F-13705 La Ciotat (FR)**
• **FAURE, Frédéric**
**F-13705 La Ciotat (FR)**

• **GONZALVO, Benoît**
**F-13705 La Ciotat (FR)**

(74) Mandataire: **Scheer, Luc**
**Gemalto SA**
**525, Avenue du Pic de Bertagne**
**CS 12023**
**13881 Gémenos Cedex (FR)**

(56) Documents cités:
**EP-A1- 2 106 093     EP-A1- 2 458 808**

• **SANNA SUORANTA ET AL: "Strong Authentication with Mobile Phone", 19 septembre 2012 (2012-09-19), INFORMATION SECURITY, SPRINGER BERLIN HEIDELBERG, BERLIN, HEIDELBERG, PAGE(S) 70 - 85, XP047016709, ISBN: 978-3-642-33382-8 page 77, ligne 25 - page 82, ligne 7**

EP 2 912 818 B1

**Description**

Le domaine de l'invention est celui des télécommunications et concerne un procédé d'authentification mutuelle entre un terminal et un serveur distant par l'intermédiaire d'un portail d'un tiers. <page 1A>

Dans le cadre de la présente invention, le terminal est typiquement un terminal utilisateur, tel qu'un téléphone mobile, un PDA ou un smartphone. Il comprend typiquement un élément de sécurité tel qu'une carte Sim ou Usim, génériquement appelée UICC. L'élément de sécurité peut également se présenter sous la forme d'un e-UICC (« embedded UICC » en anglais, c'est-à-dire une puce solidaire du terminal utilisateur (par exemple soudée dans ce terminal) faisant office d'UICC). L'élément de sécurité comporte des éléments (clés, répertoires, logiciels, fichiers,...) permettant à l'utilisateur du terminal de s'authentifier auprès d'un réseau de télécommunications, généralement cellulaire, et d'établir des communications (voix, données,...). Un élément de sécurité de ce type répond aux standards de l'ETSI.

L'élément de sécurité peut également ne pas être compris dans le terminal mais communiquer avec celui-ci par voie radio. Dans un mode de réalisation particulier, l'élément de sécurité peut par exemple être incorporé dans un appareil porté par l'utilisateur du terminal et communiquer par Bluetooth, Wifi ou une technologie basée sur le standard IEEE 802.15.4 avec le terminal. On remplace ainsi un système classique de terminal mobile comportant une carte UICC par un terminal ne comportant pas de carte UICC mais communiquant avec cette carte (ou un e-UICC) distante de quelques dizaines de centimètres à quelques mètres, voire quelques dizaines de mètres. On se référera par exemple au système eGo décrit sur le site http://www.ego-project.eu et dans le brevet EP-1.695.296.

Dans le cadre de la présente invention, le terminal utilisateur coopère donc avec un élément de sécurité tel qu'un UICC ou un e-UICC.

Le terminal utilisateur ou l'UICC comprend une application d'enregistrement à un service. On entend par « application d'enregistrement à un service » une application permettant de requérir un service auprès d'un serveur distant. Le serveur distant est typiquement une plate-forme OTA. Le service peut être une application, par exemple bancaire, à télécharger. Il peut également s'agir d'un abonnement à un service tel qu'un journal électronique quotidien.

< Le document EP-2.106.093 décrit un procédé d'authentification d'un utilisateur auprès d'un système d'authentification. Selon ce procédé, l'utilisateur s'enregistre d'abord auprès du système d'authentification et, plus tard, lorsqu'il souhaite accéder à un service fourni par un fournisseur de services, l'utilisateur s'authentifie auprès du système d'authentification. S'il est authentifié par le système d'authentification, il a accès aux services proposés par le fournisseur de services. >

Dans un mode de mise en oeuvre particulier, le service peut être l'activation d'un abonnement à un réseau cellulaire, ou alors le téléchargement de clés, répertoires, logiciels et fichiers permettant d'établir un tel abonnement. Dans ce dernier cas de figure, on est dans le cadre d'une personnalisation à distance d'un abonnement, fourni par un serveur appelé SM (Subscription Manager). Le service peut également consister à demander un basculement d'un abonnement vers un autre, géré par le même opérateur ou un autre.

Un serveur SM est un serveur permettant de personnaliser à distance (via OTA) des éléments de sécurité, par exemple pour y télécharger des éléments permettant d'authentifier l'utilisateur par un réseau de télécommunications. Il peut également s'agir de télécharger un abonnement complet dans l'UICC, celle-ci s'identifiant par exemple auprès du serveur à l'aide d'identifiants temporaires.

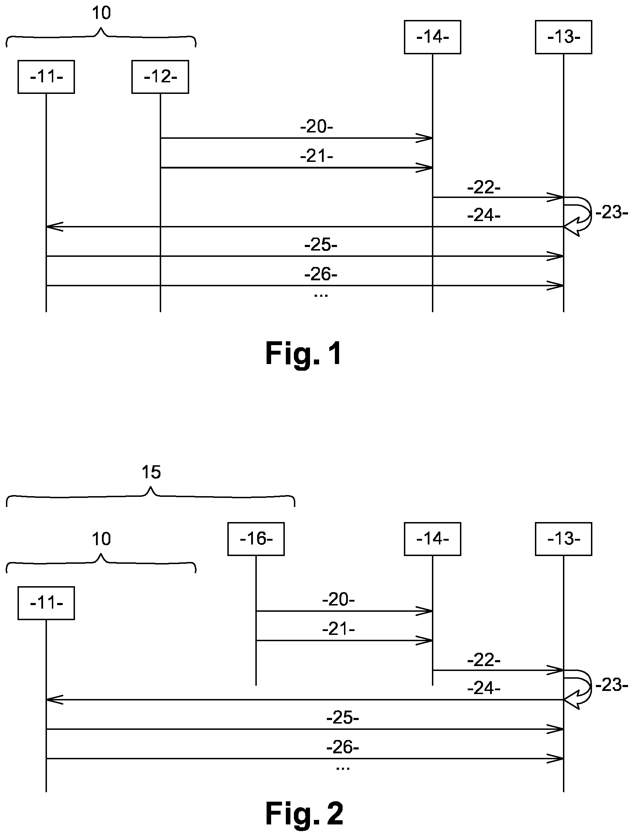

Dans le cadre de la présente invention, le terminal utilisateur communique avec le serveur distant par l'intermédiaire d'un portail d'un tiers, tel que représenté à la figure 1.

Un terminal utilisateur 10 coopère avec un élément de sécurité 11 (UICC ou e-UICC intégré ou déporté) et comporte une application 12 d'enregistrement à un service. Le terminal 10 communique avec un serveur distant 13, par exemple par radiofréquences, par l'intermédiaire d'un portail d'un tiers 14. Le serveur distant 13 est par exemple une plateforme OTA apte à fournir le service demandé par le terminal 10.

Le portail 14 est par exemple celui d'un vendeur du terminal 10 qui doit connaître l'état du terminal 10 (type et version de logiciel téléchargé, état actif ou inactif,...). L'application 12 n'a pas la possibilité de contacter directement le serveur 13 et doit donc passer par ce portail de tiers 14.

Dans un autre mode de mise en oeuvre, c'est l'utilisateur du terminal 10 qui déclenche une communication avec le portail 14, par exemple afin de télécharger un abonnement à un réseau cellulaire. Il réalise ce déclenchement par l'interface homme-machine du terminal 10, par exemple en activant une fonction dans un menu déroulant. La communication avec le portail 14 peut également s'établir grâce à l'application 12 lors de la première mise sous tension du terminal 10.

Dans la figure 1, une première étape 20 consiste à authentifier le terminal 10 auprès du portail 14. Une liaison sécurisée de type https est alors établie. Lors d'une étape 21, l'application 12 transmet au portail 13 une demande d'un service accompagnée d'un identifiant de l'élément de sécurité 11, par exemple son numéro de série qui l'identifie de manière unique. Cet identifiant sera par la suite génériquement appelé eUICCid, qu'il s'agisse d'un identifiant d'un UICC ou d'un eUICC.

Le portail retransmet, lors d'une étape 22, la demande de service et l'identifiant de l'élément de sécurité 11 au serveur distant 13. Celui-ci vérifie alors, lors d'une étape 23, les droits d'accès de l'élément de sécurité 11 au service demandé. Cette vérification consiste à vérifier que l'eUICCid est reconnu par le serveur 13 et que cet eUICC a bien le droit de requérir ce service.

Si le droit au service est accordé, le serveur 13 s'adresse directement à l'élément de sécurité 11 (étape 24) pour que celui-ci déclenche une communication sécurisée basée par exemple sur des clés partagées (« TLS-PSK handshake » en anglais). Une communication sécurisée est ainsi établie entre l'élément de sécurité 11 et le serveur 13.

L'élément de sécurité 11 envoie alors par exemple une requête de type HTTP POST avec TLS-PSK au serveur 13, accompagnée du service demandé (étape 26). La suite du procédé est ensuite classique (fourniture du service à l'élément de sécurité, vérification que le service demandé a bien été reçu, fin de la communication sécurisée, enregistrement dans le serveur 13 que l'élément de sécurité a reçu le service demandé).

La figure 2 montre une alternative possible pour établir une communication entre un terminal utilisateur et un portail distant.

Dans cette alternative, l'utilisateur, référencé par 15, dispose de son terminal 10 ainsi que d'un terminal de télécommunications 16, tel qu'un ordinateur. L'ordinateur 16 est apte à se connecter, par exemple via Internet, au portail 14. L'ordinateur 16 renferme l'application 12 d'enregistrement à un service de la figure 1.

L'utilisateur a ici la responsabilité de transmettre l'identifiant de l'eUICC (l'eUICCid) ou un code figurant dans la boîte renfermant le terminal 10 au portail 14. Cet identifiant peut également être inscrit sur le terminal 10 ou imprimé sur l'élément de sécurité sous forme d'une carte (UICC). Après que l'application 12 qui est présente dans l'ordinateur 16 ou l'utilisateur 15 se soit authentifié (étape 20), l'utilisateur 15 entre cet identifiant unique pour l'UICC ou l'eUICC par l'interface homme-machine du terminal de télécommunications 16 qui le transmet au portail 14 (étape 21). L'identifiant est accompagné par le service requis par l'élément de sécurité. Les étapes 22 à 26 sont ensuite identiques à celles de la figure 1.

Le problème posé par ces deux modes d'accès à un service est un problème de sécurité. En effet, différentes attaques sont possibles : le serveur distant 13 ne peut pas avoir la certitude que le demandeur du service est le titulaire de l'UICC car celle-ci est extractible du terminal (lorsqu'elle se présente sous la forme d'une carte Sim ou d'un carte SD par exemple).

Un attaquant peut également prendre le contrôle du portail du tiers 14 et demander l'exécution du service sur n'importe quel UICC ou eUICC. Ceci engendre donc des facturations indues ou du déni de service pour l'utilisateur final (dans le cas de SM par exemple, le service demandé peut être un désabonnement).

Enfin, un attaquant peut intercepter toute demande de service et rejouer la demande de service, ce qui engendre un déni de service au niveau du serveur 13 lorsque l'utilisateur redemande l'exécution du même service.

La présente invention a pour objectif de renforcer la sécurité au niveau du portail du tiers, ce dernier pouvant présenter des faiblesses au niveau sécurité et dans lequel le serveur distant 13 et l'utilisateur ne peuvent avoir une confiance absolue.

Cet objectif, ainsi que d'autres qui apparaîtront par la suite, est atteint grâce à un procédé d'authentification mutuelle entre d'une part un terminal utilisateur coopérant avec un élément de sécurité ainsi qu'une application d'enregistrement à un service et d'autre part un serveur distant par l'intermédiaire d'un portail d'un tiers, le serveur distant étant apte à fournir le service demandé.

Selon l'invention, le procédé consiste à :

i- après authentification de l'utilisateur du terminal utilisateur auprès du portail, transmettre au serveur distant, par l'intermédiaire du portail, une information signée R permettant dans le serveur distant d'authentifier l'élément de sécurité, ainsi qu'une requête d'un service ;

ii- authentifier dans le serveur distant l'élément de sécurité et, si l'élément de sécurité est reconnu :

iii- transmettre du serveur distant à l'application, par l'intermédiaire du portail, une valeur signée R' par le serveur distant, la valeur R' comprenant l'information ainsi qu'une adresse URL permettant de répondre à la requête ;

iv- transmettre de l'application à l'élément de sécurité une demande de vérification de la valeur signée R' ;

v- vérifier dans l'élément de sécurité la signature du serveur distant et que le service demandé a été accordé par le serveur distant ;

vi- établir, à partir de l'élément de sécurité, une connexion sécurisée avec le serveur distant et requérir l'exécution du service.

Avantageusement, l'information comprend un identifiant de l'élément de sécurité.

Préférentiellement, l'information est concaténée avec une valeur d'anti-rejeu.

Avantageusement, l'information est concaténée avec une valeur aléatoire.

L'information est préférentiellement signée par un mac.

Dans un premier mode de mise en oeuvre :

- l'étape -i- consiste à transmettre l'information signée R générée par l'élément de sécurité à l'aide du terminal utilisateur ;
- l'étape -iii- consiste à transmettre directement la valeur signée R' du portail à l'application.

Dans un second mode de mise en oeuvre :

- l'étape -i- consiste à transmettre l'information signée à partir d'un terminal de télécommunications au serveur distant, par l'intermédiaire du portail ;
- l'étape -iii- consiste à transmettre la valeur signée R' du portail au terminal de télécommunications et à inviter l'utilisateur du terminal de télécommunications d'entrer la valeur signée R' reçue dans le terminal utilisateur par son interface homme-machine, la valeur signée R' étant transmise à l'application.

D'autres caractéristiques et avantages de l'invention apparaîtront à la lecture de la description suivante de deux modes de mise en oeuvre de l'invention, donnés à titre illustratif et non limitatif, et des figures annexées dans lesquelles :

- La figure 1 représente un système de demande de service où un terminal coopérant avec un élément de sécurité initie une demande de service ;
- La figure 2 représente un système de demande de service où un utilisateur utilise un terminal de télécommunications tel qu'un ordinateur pour initier une demande de service ;
- La figure 3 représente un système de demande de service selon un premier mode de mise en oeuvre de l'invention ;
- La figure 4 représente un système de demande de service selon un second mode de mise en oeuvre de l'invention.

Les figures 1 et 2 ont été décrites précédemment.

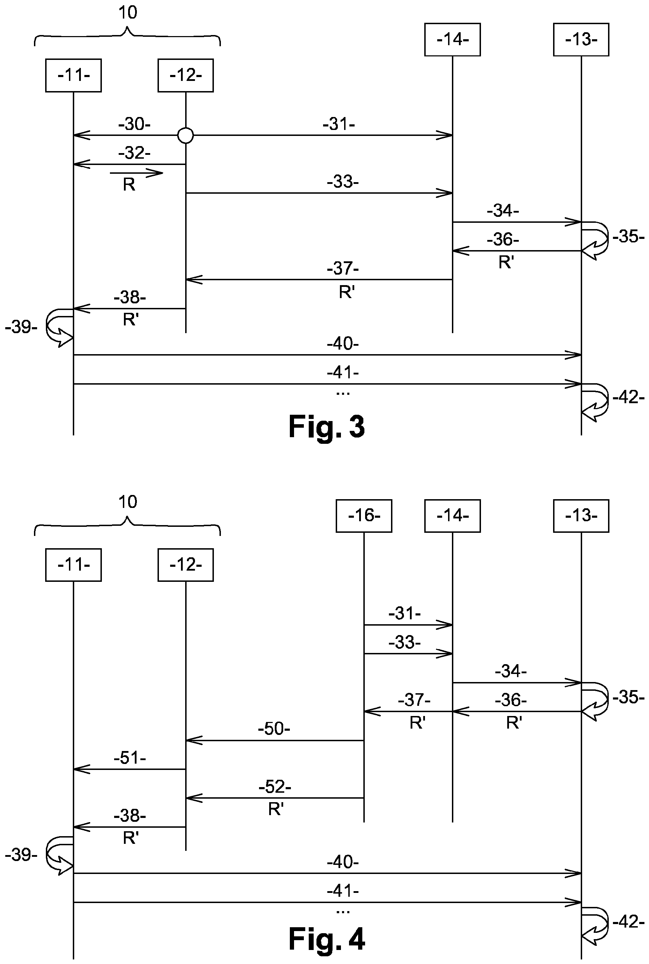

La figure 3 représente un système de demande de service selon un premier mode de mise en oeuvre de l'invention.
Dans le système de la figure 3, un terminal 10 coopérant avec un élément de sécurité 11 initie une demande de service. Le terminal 10 ou l'élément de sécurité 11 comprend une application 12 d'enregistrement à un service pouvant être fourni par le serveur distant 13 par l'intermédiaire d'un portail d'un tiers 14.
Dans une première étape 30, facultative si l'application réside dans l'élément de sécurité 11 ou si l'élément de sécurité est un eUICC, l'application 12 s'authentifie auprès de l'élément de sécurité 11. Ceci est également le cas si l'on désire que l'accès de l'application 12 à l'élément de sécurité 11 soit contrôlé par cet élément de sécurité 11. Cette authentification de l'application correspond à une authentification de l'utilisateur qui aura par exemple préalablement entré son code PIN dans le terminal. L'application 12 peut être par exemple être une midlet Java répondant à la spécification JSR177 ou un simple browser exploitant un SCWS (Smart Card Web Server) installé au sein de l'élément de sécurité 11. Après authentification de l'application 12, l'élément de sécurité 11 renvoie, lors d'une étape 32, une autorisation de requérir un service auprès du serveur 13. Cette autorisation est accompagnée par une information signée R permettant au serveur 13 d'authentifier l'élément de sécurité 11.
Dans un mode de mise en oeuvre, cette information est un identifiant de l'élément de sécurité 11, tel que son UICCid ou eUICCid (numéro de série) et la signature est un mac de l'identifiant. On a donc :

$$R = eUICCid \mathbin{\|} mac \qquad (1)$$

Le mac est calculé à partir d'une clé $K_{euiccid}$ calculée à partir de l'eUICCid de l'élément de sécurité.
Il est également possible de signer l'information selon les schémas classiques de chiffrement symétrique ou asymétrique.
Il est également possible de concaténer à l'identifiant une valeur d'anti-rejeu AR, afin de s'assurer que l'élément de sécurité ne va pas demander deux fois le même service auprès du serveur distant 13, et de signer l'ensemble. On a dans ce cas préférentiellement :

$$R = [eUICCid, AR] \mathbin{\|} mac \qquad (2)$$

La solution préférée consiste à concaténer à l'identifiant et à AR une valeur aléatoire VA et à également signer l'ensemble, pour obtenir par exemple :

$$R = [eUICCid, AR, VA] \parallel mac \qquad (3)$$

Le fait de rajouter une valeur aléatoire VA, générée par l'élément de sécurité 11, permet de changer la cryptographie même si la valeur d'AR est identique entre deux demandes de services. Ceci peut se produire si le compteur de la valeur d'anti-rejeu AR est remis à zéro. L'utilisation de VA permet donc d'assurer qu'on ne va jamais répéter deux fois la même séquence (génération de deux valeurs de R identiques à deux moments différents).

Parallèlement à l'étape 30, l'application 12 s'authentifie (étape 31) auprès du portail 14 comme préalablement expliqué en référence à la figure 1 (étape 20).

La valeur R est transmise à l'application 12 après l'étape 32 et relayée par cette application 12 au portail 14, accompagnée du service demandé (étape 33). Le portail 14 retransmet ces données (R et le service demandé) au serveur 13 (étape 34) qui effectue notamment les vérifications suivantes (étape 35) :

- Authentification (optionnelle) du portail 14 ;
- L'identité de l'élément de sécurité : eUICCid ou UICCid, sa signature (mac), la valeur d'anti-rejeu AR et la valeur aléatoire VA garantissent que seul l'élément de sécurité 11 peut avoir généré la valeur R ;
- Le service matérialisé par la demande R n'a pas déjà été rendu intégralement au préalable (valeur AR).

Le serveur 13 peut fonctionner selon un schéma à clé secrète ou en PKI. Dans tous les cas, le serveur 13 connaît les eUICCid (UICCid) des éléments de sécurité autorisés à requérir des services de sa part ainsi que les clés secrètes $K_{euiccid}$ associées. C'est à partir de ces clés secrètes que sont générés les MAC. La reconnaissance d'un MAC signifie que l'eUICC qui en est à l'origine est enregistrée au niveau du serveur 13.

Le MAC assure non seulement une fonction de vérification de l'intégrité des données reçues, comme le permettrait une simple fonction de hachage, mais de plus authentifie l'expéditeur, détenteur de la clé secrète.

Une fois ces vérifications effectuées, le serveur 13 renvoie une valeur signée R' (étape 36) comprenant l'information R reçue ainsi que le service demandé. Ce service est par exemple une adresse URL permettant de répondre à la requête de service.

A titre préférentiel, on a donc :

$$R' = [eUICCid, AR, VA, URL, R] \parallel mac$$

Avec mac étant cette fois-ci la signature du serveur et AR la valeur d'anti-rejeu reçue de l'élément de sécurité 11. Le fait de renvoyer R (facultatif) permet d'assurer un double contrôle au niveau de l'élément de sécurité 11, en vérifiant que le R envoyé est le même que celui reçu.

La valeur R' est transmise au portail 13 qui la renvoie (étape 37) à l'application 12. L'application 12 peut alors (étape 38) demander à l'élément de sécurité 11 de déclencher le service demandé. L'élément de sécurité 11 vérifie, lors d'une étape 39, grâce à la valeur R' reçue que :

- Le service a été demandé au bon serveur 13 (vérification de sa signature mac) ;
- Le R reçu est identique à celui envoyé (étape facultative) ;
- Le serveur 13 a autorisé l'exécution du service (présence d'une adresse URL par exemple).

Lors d'une étape 40, l'élément de sécurité 11 établit alors une connexion sécurisée avec le serveur 13 (TLS-PSK handshake) et demande l'exécution du service (étape 41) grâce à l'adresse URL comprise dans la réponse R' du serveur 13 (HTTP POST / service R'). Lors d'une étape finale 42, le serveur 13 peut vérifier la valeur de R' pour s'assurer que l'élément de sécurité 11 se connecte bien à lui pour l'exécution du service demandé.

La figure 4 représente un système de demande de service selon un second mode de mise en oeuvre de l'invention.

Dans ce second mode de mise en oeuvre, similaire à celui de la figure 2, l'utilisateur n'a pas accès à son terminal 10 dans les premières étapes du procédé ou alors l'application 12 n'a pas accès au portail du tiers 14. L'utilisateur est par exemple dans un point de vente de son terminal pendant l'exécution des étapes 31 à 37.

A l'aide d'un terminal de télécommunications 16, tel qu'un ordinateur, l'utilisateur final ou un vendeur du terminal 10 s'authentifie auprès du portail 14 (étape 31). Il communique ensuite (étape 33) l'identité de l'élément de sécurité 11 au portail 14, accompagnée du service demandé. Comme indiqué précédemment, cette identité peut être l'une des trois informations signées évoquées aux égalités 1 à 3 précédentes.

Cette information signée et le service demandé sont retransmis du portail 14 au serveur 13 (étape 34) qui effectue les mêmes vérifications qu'en regard de la figure 3 (étape 35). Le serveur 13 répond en renvoyant la valeur R' au portail 14 (étape 36) qui la retransmet (étape 37) au terminal de télécommunications 16. La valeur R' apparaît alors sur l'écran du terminal 16.

L'étape 50 peut être entreprise ultérieurement, par exemple au domicile de l'utilisateur. Elle consiste à lancer l'application 12. L'application 12 s'authentifie alors auprès de l'élément de sécurité 11 (étape 51) et une opération de saisie manuelle de R' est alors nécessaire pour entrer R' dans le terminal de l'utilisateur (étape 52 : saisie de R' dans le terminal utilisateur 10 par son interface homme-machine). La valeur de R' est récupérée par l'application 12 et il est demandé à l'élément de sécurité 11 (étape 38) de vérifier la valeur de R' (étape 39). Les étapes 40 à 42 sont identiques à celles décrites en référence à la figure 3.

L'étape 52 peut précéder l'étape d'authentification 51. De même, l'étape 52 peut consister à scanner le R' reçu à l'aide du terminal 10. Le R' peut également se présenter sous la forme d'un code QR.

La valeur de R (code alphanumérique par exemple) peut être comprise à l'intérieur de l'emballage (une boîte) du terminal 10 (et non pas à l'extérieur pour éviter un problème de déni de service) dans ce second mode de mise en oeuvre.

Le terminal 10 peut être un simple téléphone mobile ou alors un modem intégré dans une machine, par exemple un véhicule automobile. L'invention s'applique notamment aux communications M2M, c'est-à-dire aux communications entre machines.

L'invention permet d'obtenir une authentification mutuelle entre l'élément de sécurité 11 et le serveur 13, contrairement aux solutions décrites en référence aux figures 1 et 2 où seul le portail du tiers 14 s'authentifie auprès du serveur 13.

## Revendications

**1.** Procédé d'authentification mutuelle entre d'une part un terminal utilisateur (10) et d'autre part un serveur distant (13) par l'intermédiaire d'un portail d'un tiers (14), ledit serveur distant (13) étant apte à fournir ledit service, **caractérisé en ce que** ledit terminal utilisateur (10) coopère avec un élément de sécurité (11) ainsi qu'une application (12) d'enregistrement à un service et **en ce que** ledit procédé consiste à :

    i- après authentification de l'utilisateur dudit terminal utilisateur (10) auprès dudit portail (14), transmettre audit serveur distant (13), par l'intermédiaire dudit portail (14), une information signée R permettant dans ledit serveur distant (13) d'authentifier ledit élément de sécurité (11), ainsi qu'une requête d'un service ;

    ii- authentifier dans ledit serveur distant (13) ledit élément de sécurité (11) et, si ledit élément de sécurité (11) est reconnu :

    iii- transmettre dudit serveur distant (13) à ladite application (12), par l'intermédiaire dudit portail (14), une valeur signée R' par ledit serveur distant (13), ladite valeur R' comprenant ladite information ainsi qu'une adresse URL permettant de répondre à ladite requête ;

    iv- transmettre de ladite application (12) audit élément de sécurité (11) une demande de vérification de ladite valeur signée R' ;

    v- vérifier dans ledit élément de sécurité (11) la signature dudit serveur distant (13) et que ledit service demandé a été accordé par ledit serveur distant (13) ;

    vi- établir, à partir dudit élément de sécurité (11), une connexion sécurisée avec ledit serveur distant (13) et requérir l'exécution dudit service.

**2.** Procédé selon la revendication 1, **caractérisé en ce que** ladite information comprend un identifiant dudit élément de sécurité (11).

**3.** Procédé selon la revendication 2, **caractérisé en ce que** ladite information est concaténée avec une valeur d'anti-rejeu.

**4.** Procédé selon l'une des revendications 2 et 3, **caractérisé en ce que** ladite information (11) est concaténée avec une valeur aléatoire.

**5.** Procédé selon l'une des revendications 1 à 4, **caractérisé en ce que** ladite information est signée par un mac.

**6.** Procédé selon l'une des revendications 1 à 4, **caractérisé en ce que** :

    - l'étape -i- consiste à transmettre ladite information signée R générée par ledit élément de sécurité (11) à l'aide dudit terminal utilisateur (10) ;
- l'étape -iii- consiste à transmettre directement ladite valeur signée R' dudit portail (14) à ladite application (12).

7. Procédé selon l'une des revendications 1 à 5, **caractérisé en ce que** :

- l'étape -i- consiste à transmettre ladite information signée à partir d'un terminal de télécommunications (16) audit serveur distant (13), par l'intermédiaire dudit portail (14) ;
- l'étape -iii- consiste à transmettre ladite valeur signée R' dudit portail (14) audit terminal de télécommunications (16) et à inviter l'utilisateur dudit terminal de télécommunications (16) d'entrer ladite valeur signée R' reçue dans ledit terminal utilisateur (10) par son interface homme-machine, ladite valeur signée R' étant transmise à ladite application (12).

**Patentansprüche**

1. Verfahren zur gegenseitigen Authentifizierung eines Benutzerterminals (10) einerseits und eines Fernservers (13) andererseits über das Portal eines Dritten (14), wobei der Fernserver (13) in der Lage ist, besagten Dienst bereitzustellen, **dadurch gekennzeichnet, dass** das Benutzerterminal (10) mit einem Sicherheitselement (11) sowie einer Applikation (12) zur Registrierung für einen Dienst zusammenwirkt, und dadurch, dass besagtes Verfahren darin besteht:

i - nach der Authentifizierung des Benutzers des Benutzerterminals (10) in besagtem Portal (14) an den Fernserver (13) über das Portal (14) eine signierte Information R zu übermitteln, die im Fernserver (13) die Authentifizierung des Sicherheitselements (11) sowie die Anforderung eines Dienstes ermöglicht;
ii - das Sicherheitselement (11) im Fernserver (13) zu authentifizieren und falls das Sicherheitselement (11) erkannt wird:
iii - einen vom Fernserver (13) signierten Wert R' vom Fernserver (13) über das Portal (14) an die Applikation (12) zu übertragen, wobei der Wert R besagte Information sowie eine URL-Adresse umfasst, die das Antworten auf die Anforderung ermöglicht;
iv - von der Applikation (12) eine Anfrage zur Überprüfung des signierten Werts R' an das Sicherheitselement (11) zu übertragen,
v - im Sicherheitselement (11) die Signatur des Fernservers (13) zu prüfen und zu prüfen, ob der angeforderte Dienst vom Fernserver (13) genehmigt wurde;
vi - ausgehend vom Sicherheitselement (11) eine gesicherte Verbindung mit dem Fernserver (13) zu erstellen und die Ausführung des Dienstes anzufordern.

2. Verfahren nach Anspruch 1, **dadurch gekennzeichnet, dass** die Informationen eine Kennung des Sicherheitselements (11) enthält.

3. Verfahren nach Anspruch 2, **dadurch gekennzeichnet, dass** die Information mit einem Replayschutz verknüpft ist.

4. Verfahren nach einem der Ansprüche 2 und 3, **dadurch gekennzeichnet, dass** die Information (11) mit einem Zufallswert verknüpft ist.

5. Verfahren nach einem der Ansprüche 1 bis 4, **dadurch gekennzeichnet, dass** besagte Information durch eine MAC signiert wird.

6. Verfahren nach einem der Ansprüche 1 bis 4, **dadurch gekennzeichnet, dass**:

- Schritt -i- darin besteht, die durch das Sicherheitselement (11) generierte signierte Information R mithilfe des Benutzerterminals (10) zu übertragen;
- Schritt -ii- darin besteht, den signierten Wert R' des Portals (14) direkt an die Applikation (12) zu übertragen.

7. Verfahren nach einem der Ansprüche 1 bis 5, **dadurch gekennzeichnet, dass**:

- Schritt -i- darin besteht, die signierte Information von einem Telekommunikationsterminal (16) über das Portal (14) an den Fernserver (13) zu übertragen;
- Schritt -iii- darin besteht, den signierten Wert R' des Portals (14) an das Telekommunikationsterminal (16) zu übertragen und den Benutzer des Telekommunikationsterminals (16) aufzufordern, den signierten Wert R' im Benutzerterminal (10) über seine Mensch-Maschine-Schnittstelle einzugeben, wobei der signierte Wert R' an die Applikation (12) übertragen wird,

## Claims

1. A method for mutual authentication between on the one hand, a user terminal (10) and on the other hand a remote server (13) by means of a third party (14) portal, with said remote server (13) being adapted to provide said service, **characterized in that** said user terminal (10) cooperates with a security element (11) as well as an application (12) for registering with a service, and **in that** said method consists in:

    i- after authenticating the user of said user terminal (10) with said portal (14), transmitting to said remote server (13), by means of said portal (14), signed information R making it possible to authenticate said security element (11) in said remote server (13), and a request for a service;
    ii- authenticating said security element (11) in said remote server (13) and, if said security element (11) is recognized:
    iii- transmitting, from said remote server (13) to said application (12) by means of said portal (14), a signed value R' by said remote server (13), with said value R' comprising said information and an URL for responding to said request;
    iv- transmitting, from said application (12) to said security element (11), a request for checking said signed value R';
    v- checking, in said security element (11) the signature of said remote server (13) and that the requested service has been granted by said remote server (13) ;
    vi- establishing, from said security element (11), a secure connection with said remote server (13) and requesting the execution of said service.

2. A method according to claim 1, **characterized in that** said information comprises an identifier of said security element (11).

3. A method according to claim 2, **characterized in that** said information is concatenated with an anti-replay value.

4. A method according to one of claims 2 and 3, **characterized in that** said information (11) is concatenated with a random value.

5. A method according to one of claims 1 to 4, **characterized in that** said information is signed by a mac.

6. A method according to one of claims 1 to 4, **characterized in that**:

    - the step -i- consists in transmitting said signed information R generated by said security element (11) using said user terminal (10);
    - the step -iii- consists in directly transmitting said signed value R' from said portal (14) to said application (12).

7. A method according to one of claims 1 to 5, **characterized in that**:

    - the step -i- consists in transmitting said signed information from a telecommunication terminal (16) to said remote server (13) by means of said portal (14);
    - the step -iii- consists in transmitting said signed value R' from said portal (14) to said communications terminal (16) and prompting the user of said telecommunications terminal (16) to enter said signed value R' received into said user terminal (10) via its man-machine interface, with said signed value R' being transmitted to said application (12).

## Fig. 1

## Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1695296 A

- EP 2106093 A